# EUROPEAN PATENT SPECIFICATION

(11) **EP 2 505 084 B1**
(45) Date of publication and mention of the grant of the patent: **13.11.2013**
(21) Application number: 11305376.3
(22) Date of filing: 31.03.2011
(51) Int. Cl.: A23L 3/3472, A23L 3/3517, A23C 9/13

(54) **Shelf-stable food products and methods of making same**
Lagerbeständige Nahrungsmittelprodukte und Herstellungsverfahren dafür
Produits alimentaires longue conservation et leurs procédés de préparation

(43) Date of publication of application: 03.10.2012
(73) Proprietor: COMPAGNIE GERVAIS DANONE, 75009 Paris (FR)
(72) Inventor: Pratbernou, Françoise, 92160 Antony (FR); Colomban, François, 75013 Paris (FR); Philippe, Jean-Marc, 91310 Leuville sur Orge (FR); Bâ, Jean-François, 94400 Vitry sur Seine (FR); Fuhrmann, Benoît, 78690 Les Essarts-le-Roi (FR)
(74) Representative: Regimbeau

(56) References cited:
- WO-A1-2010/124224
- FR-A1- 2 231 322
- JP-A- 2004 194 671
- JP-A- 2008 290 992
- US-A1- 2007 286 932
- DATABASE BIOSIS [Online] BIOSCIENCES INFORMATION SERVICE, PHILADELPHIA, PA, US; 1992, BEHANAN L ET AL: "EFFECT OF FRUIT JUICES WITH ACETIC ACID ON THE QUALITY AND STORAGE STABILITY OF PICKLED FISH", XP002654769, Database accession no. PREV199293110810 & FISHERY TECHNOLOGY, vol. 29, no. 1, 1992, pages 40-44, ISSN: 0015-3001

## Description

### BACKGROUND OF THE INVENTION

The present disclosure generally relates to health and nutrition. More specifically, the present disclosure relates to shelf-stable edible products, in particular dairy products, and methods of making the same.

Many refrigerated food products are currently on the market. Refrigeration is a process of cooling or freezing a food product to lower temperatures so as to extend the life of the food product. By refrigeration, a food product containing bacteria can be maintained without spoiling for extended periods of time such as weeks or months. Typical food products requiring refrigeration include meat and dairy products including fermented dairy products such as yogurt.

Yogurt is generally known to be a product formed from milk which has been heated to an incubation or fermentation temperature, cultured with a yogurt producing ferment of, for example, *Lactobacillus bulgaricus* and *Streptococcus thermophilus*, and incubated for a period of time sufficient to reach a pH of about 3.5 to about 5.0. The yogurt is then refrigerated to prevent the growth of microorganisms, and packaged for sale. The yogurt product produced by the aforementioned method must be refrigerated until a time just prior to its consumption to prevent spoilage. Once refrigerated, yogurt is stable for no more than a few weeks.

A number of refrigerated food products have become of great commercial significance. Among them, yogurt products are projected to show the greatest market growth. However, because of the inherent disadvantages of handling, shipping and marketing refrigerated, easily spoiled food products, they are poorly distributed in hot countries, impairing these inhabitants to benefit from their positive nutritional and/or health effect.

A lot of research efforts have been promoted to replace refrigerated edible products by products that are shelf-stable for a long time, typically several months at room temperature. Such products would have the distinct advantages of greatly reducing handling, shipping and marketing costs, because they would make it possible to spare energy costs associated with refrigeration or freezing. They would therefore be easier to distribute in hot countries.

For example, a number of research efforts have been directed to the production of long lasting shelf-stable yogurts, eg in WO 2010/124224. Most of these efforts have involved heating the yogurt to a temperature which kills or inactivates lactic acid bacteria present in the yogurt and that could cause spoilage. These microorganisms were initially thought to be solely responsible for the instability that ordinary yogurts display upon room temperature storage.

However, food products are also often contaminated by bacterial spores, yeasts, or moulds.

The most frequent bacterial spores found in food products belong to the genus *Bacillus* and *Clostridium.* These resistant forms of bacteria enable them to undergo hard conditions of environment (such as heat or U.V.). They can for example survive to temperatures higher than 100°C during few minutes, thus remaining alive even after cooking steps. They can divide and grow during the product shelf life, if germination is favoured. As high temperature favours the germination of the spores, the presence of these bacterial spores is highly problematic to the storage of food products in countries in which ambient temperature is mainly comprised between 20°C and 40°C.

Most of the microorganisms which are present in food products are introduced during the manufacturing process from the use of raw materials. The contaminations level therefore highly depends of the quality of raw material's production and of the quality of the storage. Generally, the quality levels of the raw materials are strictly controlled so as to minimize the quantity of microorganisms that are introduced in food products. But sometimes, it is still not possible to strictly control the safety of the raw materials, so that the level of contaminations is high, in particular if raw materials are atypical such as local ingredients, produced only in a local area. Each microorganism present in a product can be a problem, because it can spoil the food product, or create a health damages.

As lots of food products are health beneficial, but require to be refrigerated in order to prevent the growth of bacterial spores, yeasts and moulds, there was therefore an urgent need for safe products that would be free of bacterial spores so as to be stored during few months at room temperature in hot countries.

The present Inventors solved this problem by identifying a new process for manufacturing long shelf life packaged food products, which are free of bacterial spores, yeasts and moulds or which have a negligible amount of bacterial spores, yeasts and moulds, in particular an amount which is not identifiable by usual methods of counting and can therefore be stored at high temperatures during more than three months. They have indeed demonstrated that the use of particular natural acidic plant extracts, and weak organic acids, in combination with defined cooking and pasteurising steps, enables to get rid of bacteria, bacterial spores, yeasts and moulds that are usually found in food products.

### FIGURE LEGEND

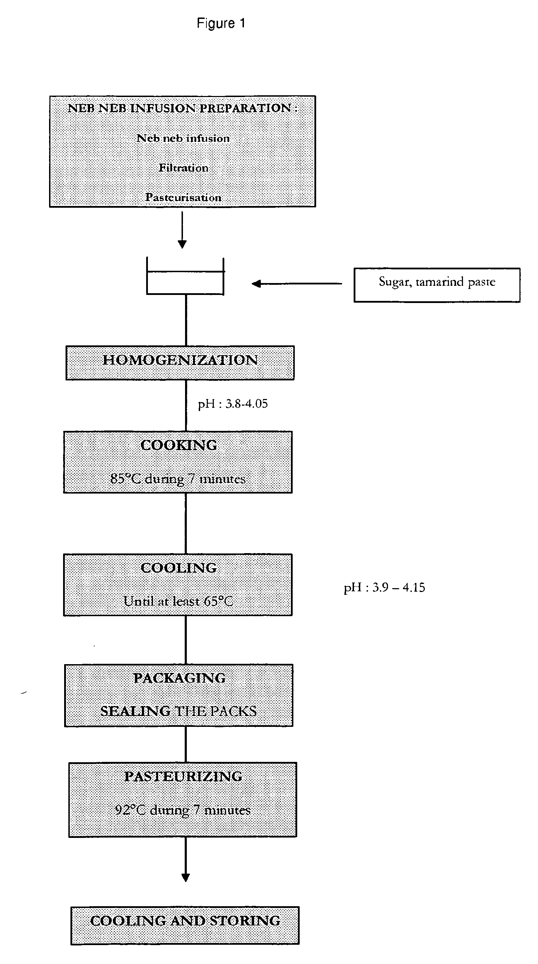

Figure 1 discloses a schematic overview of the different steps of the manufacturing process of the invention.

### DETAILED DESCRIPTION OF THE INVENTION

The present Inventors surprisingly identified that adding extracts of two plants, namely tamarind fruit pulp and neb neb fruits, favours sterilisation of products in which they are incorporated.

Tamarind (*Tamarindus indica*) is a tree in the family of Fabaceae, indigenous to tropical Africa. It continues to grow wild in Sudan, and it is cultivated in Cameroon, Nigeria, and Tanzania. It is widely distributed throughout the tropical belt, from Africa to south Asia. The tree grows well in full sun in clay, loam, sandy and acidic soil types, with a high drought and aerosol salt resistance. Their fruits (also called "tamarind") are indehiscent legume, sometimes called "pods", 12 to 15 cm in length, with a hard, brown shell. They have a fleshy, juicy, acidulous pulp. It is mature when the flesh is coloured brown or reddish-brown. The tamarind fruit pulp is edible and popular. The hard green pulp is considered by many to be too sour and acidic, but it is often used as a component of savory dishes, or as a pickling agent. The ripened fruit is considered the more palatable as it becomes sweeter and less sour (acidic) as it matures. It is used in desserts as a jam, blended into juices or sweetened drinks, sorbets, ice-creams and all manner of snack. It is also consumed as a natural laxative.

Neb neb (*Acacia nilotica*) is a tree growing in Africa (from Senegal to Soudan), in Arabia and in India. Its fruits are 10 to 15 cm length, grey and slightly curved. Fruit powder has been used since ever for its constipating effect. Roots are also used for treating dental carries, diarrhoeas and inflammatory diseases.

The Inventors have also identified necessary manufacturing conditions and steps enabling to get rid of all bacteria, bacterial spores, yeasts and moulds in final food products containing neb neb and tamarind extracts. These manufacturing steps are i) the setting of a defined pH value, and ii) cooking and pasteurising steps, the parameters of which being precisely settled. The thus obtained food products can be safely stored at room temperature during several months, even in countries in which room temperature is mainly comprised between 20°C and 45°C.

In a first aspect, the present invention discloses a process for manufacturing a packaged edible product, comprising:
a) obtaining an aqueous mixture comprising tamarind fruit pulp and neb neb fruits,
b) adjusting the pH of the thus obtained aqueous mixture to a value from 3.6 to 4.8, by adding a weak organic acid,
c) cooking said mixture at a temperature from 75°C to 95°C, preferably above about 80°C,
d) adjusting the pH of the resulting mixture to a value from 3.6 to 4.8, by adding a weak organic acid,
e) optionally cooling the cooked mixture to a temperature of at least about 65°C,
f) packaging and sealing the thus obtained mixture, and
g) pasteurising the resulting sealed packs at a temperature of about 92°C, in order to obtain a packaged edible product.

As used herein, the term "edible product" designates any food product that can safely be eaten by human beings.

The tamarind fruit pulp is recovered from the tamarind pod. It is available on the market for example in the form of a tamarind paste, of fresh tamarind pods or of a concentrate of tamarind pods. Preferably, tamarind fruit pulp is added in the aqueous mixture of step a) in an amount from about 0.5 % to 16 %, preferably from about 1 % to 3 %, and more preferably of about 1.84%. In a more preferred embodiment, tamarind fruit pulp is under the form of a 80% tamarind paste which is added to the aqueous mixture of step a) in an amount of 1-20% w/w of the final product.

As used hereafter, the term "neb neb fruits" designates either the fruits or fruits powder of the tree called *Acacia nilotica*. Preferably, neb neb fruits is added to the aqueous mixture of step a) in an amount from about 0.1 % to 2 %, preferably from about 0.15 % to 1 %, more preferably of about 0.175 %. In a more preferred embodiment, the neb neb fruits containing aqueous mixture of step a) comprises from about 1% to 80% of a 10% neb neb solution which has been prepared prior to step a).

The 10 % neb neb solution is preferably prepared by infusing for example 10g of neb neb powder in 100mL water from 4 to 24 hours at a temperature comprised between 2°C and 35°C, more preferably during about 15 hours at about 4°C. In a more preferred embodiment, the resulting solution is filtrated so as to avoid introducing neb neb powder into the food product. This filtrated solution can be used extemporaneously. In the contrary case, it can be pasteurised at a temperature of from about 75°C to about 90°C during 30 seconds to 15 minutes, preferably during about 7 minutes at about 92°C.

In a preferred embodiment, the manufacturing process of the invention further comprises a step of adding a dairy mixture either before step b), or after step b) and before step d) so that the mixture of steps e) to g) is a dairy mixture and the edible product is a dairy product. Said dairy mixture can be an acidified non-fermented milk mixture or a fermented milk mixture. It is preferably a fermented milk mixture which is chosen from stirred yoghurt, drinkable yoghurt, fermented milk and white cheeses.

The terms "fermented milks" and "yogurts" are given their usual meanings in the field of the dairy industry, that is, products destined for human consumption and originating from acidifying lactic fermentation of a milk substrate. These products can contain secondary ingredients such as fruits, vegetables, sugar, etc. Reference can be made, for example, to French Decree No. 88-1203 of 30 Dec. 1988 relative to "fermented milks and yogurt or yoghurt", published in the Official Journal of the French Republic of Dec. 31, 1988. Reference can likewise be made to the "Codex Alimentarius" (prepared by the Commission of the Codex Alimentarius under the aegis of the FAO and the OMS, and published by the Information Division of the FAO, available online at http://www.codexalimentarius.net; cf. more particularly volume 12 of the Codex Alimentarius "Codex standards for milk and dairy products", and the standard "CODEX STAN A-11(a)-1975").

These products are generally obtained through fermentation of a dairy medium by lactic acid bacteria. Said dairy medium can be obtained or derived from animal milk, such as cow milk, goat milk, or sheep milk. Preferably, said dairy medium is derived from cow milk. The skilled person is familiar with the fermentation techniques used in the dairy industry. Preferred fermenting bacteria are chosen from: lactobacilli (such as *Lactobacillus acidophilus, Lb. casei, Lb. plantarum, Lb. reuteri, Lb. johnsonil),* streptococci (such as *Streptococcus thermophilus*), bifidobacteria (*Bifidobacterium bifidum, B. longum, B. breve, B. animalis*) and lactococci (*Lactococcus lactis*).

More particularly, the expression "fermented milk" is reserved in the present application for a dairy product prepared with a milk substrate which has undergone treatment at least equivalent to pasteurisation, seeded with the microorganisms which are characteristic of each product. "Fermented milk" has not undergone any treatment which might subtract an element contained into the milk substrate and especially has not undergone draining of the coagulum. Coagulation of "fermented milks" must not be obtained by means other than those resulting from the activity of the microorganisms contained therein.

The term "yogurt" is reserved for fermented milk obtained, according to local and constant usage, by the development of specific thermophilic lactic acid bacteria known as *Lactobacillus bulgaricus* and *Streptococcus thermophilus,* which must be in the living state in the final product, at the rate of at least 10 million bacteria per gram relative to the lactic part. In certain countries, regulations require the addition of other lactic bacteria for producting a yoghurt, and especially the additional use of strains of *Bifidobacterium* and/or *Lactobacillus acidophilus* and/or *Lactobacillus casei*. These additional lactic acid bacterial strains are intended to impart various properties to the final product, such as that of favouring equilibrium of intestinal flora or modulating the immune system.

In practice, the expression "fermented milk" is therefore generally utilised to designate fermented milks other than yoghurts. It can also, depending on the country, be known under names as diverse as, for example, "Kefir", "Kumtss", "Lassi", "Dahi", "Leben", "Filmjolk", "Villi", "Acidophilus milk". With respect to fermented milks, the quantity of free lactic acid contained in the fermented milk substrate must not be less than 0.6 g per 100 g at point of sale, and the protein content in the lactic part must not be less than that of normal milk.

The notion of "stirred yogurt" and "drinkable yogurt" are also known to the skilled person in the field of the dairy industry. Stirred yogurts are fermented dairy products having a viscosity comprised between 150 and 200 mPa/s.

Finally, the name "white cheese" is, in the present application, reserved for unrefined non-salty cheese, which has undergone fermentation by lactic acid bacteria only (and no fermentation other than a lactic fermentation).

Acidified non-fermented milk mixture designates milk-based mixture having a pH comprised between about 3.5 and 5, which has not undergone any fermentation step and does therefore not comprise any bacteria.

Preferably, said dairy mixture represents from 5% to 35% w/w of the final dairy product.

In a particular embodiment, the process of the invention further comprises a step of adding aromas, sugar, nutrients and/or vitamins, preferably under powder form, more preferably before the cooking step c). Said sugar is preferably sucrose, glucose (e.g. glucose syrup, isoglucose syrup), or a mixture of sucrose and glucose. Said aroma can be selected from fruit flavors, vanilla, chocolate, coffee, and any food-acceptable known aroma. Fruit flavors include strawberry, wild strawberry, red berries, exotic fruits, banana, or strawberry/banana. Said vitamins are preferably chosen among: vitamin A, vitamin E, vitamin K, vitamin C, vitamin D, vitamin B1, vitamin B2, vitamin B3, vitamin B5, vitamin B6, and vitamin B12. Said nutrients are preferably chosen from: zinc, iron, iodine, calcium, magnesium, and potassium.

The present Inventors have shown that particular manufacturing steps have to be tightly controlled so as to get rid of all bacteria and bacterial spores in the final food products containing neb neb fruits and tamarind fruit pulp. One of this important manufacturing step is setting of a defined pH value, before and / or after the cooking step. In a particular embodiment, if it is required, the pH of the mixture in step b) is adjusted at about 20°C to a value comprised from 3.6 to about 4.8, preferably from about 3.8 to 4.1, and more preferably from about 3.8 to about 4.05. In another embodiment, if it is required, the pH of the mixture in step d) is adjusted at 20°C to a value from about 3.6 to about 4.8, preferably from about 3.7 to about 4.2.

The person skilled in the art will easily determine if it is required (or not) to adjust the pH to the indicated values. As a matter of fact, if the pH value of the mixture at the end of step a) or at the end of step c) is already comprised within the given range, it will not be useful to further modify the pH of the mixture and steps b) and d) will be useless.

The above-mentioned pH adjustment has to be performed by adding a weak organic acid. In a preferred embodiment, this weak organic acid is chosen from lactic acid, acetic acid, phosphoric acid, sorbic acid, benzoic acid, succinic acid, propionic acid, fumaric acid, ascorbic acid, tartaric acid, citric acid and malic acid. More preferably, it is malic acid. The finally obtained edible product can thus comprise from about 0.1 to about 10 % w/w of said weak organic acid, for example from about 0.1 to about 0.3 % w/w of malic acid.

A second manufacturing step which is important for obtaining the shelf-stable edible product of the invention is the cooking step c), which is dedicated to destroy the vegetative bacterial spores potentially present in the product. In a particular embodiment, said cooking step c) is performed under stirring, at a temperature above 80°C, which is for example from about 75°C to about 95°C during about 2 to 20 minutes, preferably from about 82°C to about 87°C during about 6 to 8 minutes. Said cooking step is more preferably performed at a temperature of about 85°C during about 7 minutes under stirring.

Once this cooking step has been performed, it is important not to decrease the temperature of the cooked product below about 65°C until the packaging step. It is however possible, for organoleptic reasons, to cool the cooked mixture so that cooking would be stopped, yet without favouring the thermophilic bacterial growth. In a preferred embodiment, the final temperature in cooling step e) is therefore from about 65°C to about 71°C, preferably from about 65°C to about 68°C. Such a cooling step can be performed under low stirring. It is possible to perform said cooling step e) by adding the previously mentioned acidified milk mixture. The "cooled" product can be stored at the final temperature obtained in step e) (which is superior to 65°C) during at most 4 hours.

The product of the invention is then distributed into the final packs and said packs are sealed during the packaging step f). Optionally, the food product can be heated again to about 75°C before its distribution into the packs, so that the pasteurising conditions will be easily reached.

The packaging has to be performed into waterproof and opaque packs, which are commonly used for storing food ingredients, such as long shelf life food ingredients. Such packs are preferably single dose sticks of about 50 g, so that the edible product of the invention might be eaten as an "on the go" product at any time, in any place.

A third manufacturing step which is required for obtaining the packaged dairy product of the invention is the pasteurising step g), which ensure that no vegetative spores are finally present in the packaged product. This pasteurising step has to be performed at a temperature from 75°C to about 95°C during about 30 seconds to 15 minutes, preferably at a temperature of about 92°C during about 7 minutes. The higher the level of the raw material's contamination is, the higher the heat treatment of the final pasteurising step should be.

It is noteworthy that the time lapsed between said cooking step c) and said pasteurising step g) is preferably from about 30 minutes to about 4 hours.

It is of course possible to add other food acceptable ingredients into the edible products during the process of the invention. These additional ingredients are: cereals, pieces of chocolate, pieces of fruits. These ingredients have to be added before the cooking step unless they are devoid of any contaminant (as yogurts are).

When all the necessary process conditions are observed, the resulting product has a pH from about 3.9 to about 4.15 at about 20°C and is devoid of bacteria, bacterial spores, yeast, and/or fungi after 4 months of storing, whatever the storing temperature and moisture conditions are. In particular, the product which is obtained has a shelf life of at least about 4 months under conditions of high temperature and/or high humidity level. In other words, the edible product of the invention can be stored as long as 4 months, preferably 6 months, more preferably 8 months, and even more preferably 12 months in a room having a temperature which is comprised between 25°C and 45°C in average, preferably between 30°C and 40°C in average. Moreover, the edible product can be stored in a room having moisture from at least about 50 %, preferably from at least about 60 %, to about 100%.

In a second aspect, the present invention concerns a packaged, long shelf life edible product obtainable by the previously described manufacturing process.

In a third aspect, the present invention is related to a packaged, long shelf life edible product comprising a least:
a. tamarind fruit pulp,
b. neb neb fruits,
c. A weak organic acid.

In a preferred embodiment, the packaged, long shelf life edible product further comprises a dairy mixture and the edible product of the invention is a dairy product. Said dairy mixture can be an acidified non-fermented milk mixture or a fermented milk mixture. It is preferably a fermented milk mixture which is chosen from stirred yoghurt, drinkable yoghurt, fermented milk and white cheeses. All these dairy products have been previously described. Preferably, said dairy mixture represents from 1% to 35% w/w of the final dairy product.

In a preferred embodiment, the edible product of the invention contains from about 0.5 % to 16 %, more preferably from about 1 % to 3 %, preferably from about 1 % to 2 %, and more preferably of about 1.84% of tamarind extract.

In another preferred embodiment, the edible product of the invention from about 0.1 % to 2 %, preferably from about 0.15 % to 1 %, more preferably of about 0.175 % of neb neb extract.

In another preferred embodiment, the edible product of the invention contains a weak organic acid which is chosen from lactic acid, acetic acid, phosphoric acid, sorbic acid, benzoic acid, succinic acid, propionic acid, fumaric acid, ascorbic acid, tartaric acid, citric acid and malic acid. More preferably, it is malic acid. In a more preferred embodiment, it contains from about 0.1 to about 10 % w/w of said weak organic acid. For example, the edible product of the invention may contain from about 0.1 to about 0.3 % w/w of malic acid.

In another preferred embodiment, the edible product of the invention also comprises aromas, sugar, nutrients and/or vitamins. Said sugar is preferably sucrose, glucose (e.g. glucose syrup, isoglucose syrup), or a mixture of sucrose and glucose. Said vitamins are preferably chosen among: vitamin A, vitamin E, vitamin K, vitamin C, vitamin D, vitamin B1, vitamin B2, vitamin B3, vitamin B5, vitamin B6, and vitamin B12. Said nutrients are preferably chosen from: zinc, iron, iodine, calcium, potassium and magnesium. Said aroma can be selected from fruit flavors, vanilla, chocolate, coffee, and any attractive and tasty known aroma. Fruit flavors include strawberry, wild strawberry, red berries, exotic fruits, banana, or strawberry/banana. In a preferred embodiment, said aroma is a vanilla aroma.

The edible product of the invention has preferably a pH from about 3.9 to about 4.15 at about 30°C and is devoid of bacteria, bacteria spores yeast, and fungi until at least 4 months of storage, whatever the temperature and moisture conditions are. By "is devoid", it is meant that the edible product contains less bacteria (spores and/or vegetative cells, yeast and/or mould) than the detection limitation of the method. In the present invention, the detection limitation is presented pages 14 and 15 (table). The edible product of the invention is devoid of bacteria if it contains less than 10 cfu/g of bacteria or less than 1 cfu/g of bacteria.

Said product can thus be stored during at least 4 months, preferably 6 months, more preferably 8 months, and even more preferably 12 months under conditions of high temperature and high humidity level. In other words, the edible product of the invention can be stored as long as 4 months, preferably 6 months, more preferably 8 months, and even more preferably 12 months in a room having a temperature which is comprised between 25°C and 45°C in average, preferably between 30°C and 40°C in average. Moreover, the edible product can be stored in a room having a moisture from at least about 50 %, preferably from at least about 60 %, to about 100%.

Preferably, the edible product of the invention has a caloric content from about 120 kcal to 140 kcal per 100 g and/or it is packaged in a single dose stick of about 50 g, so as to be used as an "on the go" food product, which can be eaten at any time, any where.

The edible product of the invention can be used as a nutritional food supplement, especially for the inhabitants of hot and poor countries which have no easy access to refrigerating systems.

### EXAMPLES

### 1. Composition of dairy products of the invention

### 1.1. Dairy product containing 10 % yogurt

A first example of a dairy product obtained by the process of the invention comprises:
58.168% of water,
12 % of sugar,
10 % of yogurt,
2.3 % of tamarind paste,
1.75 % of a 10 % solution of neb-neb, and
0.272 % of malic acid.

This product further contains additional edible ingredients that are conventional in food products (QSP 100).

The pH of this product is 4.05.

### 1.2. Dairy product containing 20 % yogurt

A second example of a dairy product obtained by the process of the invention comprises:
49.5 % of water,
12.4 % of sugar,
20 % of yogurt,
2.3 % of tamarind paste,
1.75 % of a 10 % solution of neb-neb, and
0.5 % of malic acid.

This product further contains additional edible ingredients that are conventional in food products (QSP 100).

The pH of this second product is 4.05.

### 2. Example of a manufacturing process of the product of the invention (figure 1)

### 2. 1. Preparation of the neb neb extract

A 10 % neb neb infusion was prepared by adding neb neb powder in water. This solution was infused during 15 hours at 4°C. If necessary , the infused solution was filtrated before use.

If it was not used extemporaneously, the neb neb solution was pasteurised (85°C during 7 minutes) after to be infused at 4°C for 15 hours. Here again, if necessary the infused solution was filtrated before pasteurisation to occur.

### 2.2. Mixing of the ingredients

The obtained neb neb solution was added in a tank, as well as water, sugar, tamarind paste, and optionally vitamins, nutrients and/or aromas. This mixture was homogenized under low stirring.

Its pH was measured and adjusted to a pH of 3.95 by adding the appropriate amount of malic acid.

### 2.3. Cooking of the mixture

The homogenized mixture was then cooked during 7 minutes at 85°C under stirring. The cooking was stopped by the addition of cold yogurt and the temperature of the cooled mixture was maintained at 65°C, under low stirring, until the packaging of the product. The pH of the cooked mixture was measured and, if necessary, was adjusted to a pH of 4.05 by adding an appropriate amount of malic acid.

### 2.4. Packaging if the cooked mixture

The cooked mixture was then heated to 75°C and then packaged in water-proof packs, said packs being further sealed.

### 2.5. Pasteurisation if the sealed packs

The sealed packs were then pasteurised during 7 minutes at 92°C.

### 2.6. Storage if the packs

The final packaged edible products were further cooled and stored at room temperature.

### 3. Bacteriological experiments

### 3.1. Bacteriological content of the final packaged product (product with 20% if yogurt)

The bacterial content of a 20 % yogurt of the invention, which was obtained according to the above-mentioned manufacturing process and stored at 30°C, was measured from the completion of the whole manufacturing process, at days 30, 60 90 and 120. Vegetative cells and spores were also counted.

| **Germ** | **Method** | **threshold** | **d+30 / 30°C** | **d+60 / 30°C** | **d+90 / 30°C** | **d+120 / 30°C** |
|---|---|---|---|---|---|---|
| *Bacillus cereus* | NF EN ISO 7932 | < 1 | < 1 | < 1 | < 1 | < 1 |
| Aerobic mesophilic flora | NF ISO 4833 | < 1 | < 1 | < 1 | < 1 | < 1 |
| Anaerobic mesophilic flora | NF ISO 4833 after anaerobiotic incubation | < 1 | < 1 | < 1 | < 1 | < 1 |
| Aerobic thermophilic flora | NF ISO 4833 after 55°C incubation | < 1 | < 1 | < 1 | < 1 | < 1 |
| Anaerobic thermophilic flora | NF ISO 4833 after 55°C anaerobiotic incubation | < 1 | < 1 | < 1 | < 1 | < 1 |
| Aerobic mesophilic spores | NF ISO 4833 after 10 minutes at 70°C | <10 | <10 | <10 | <10 | <10 |
| Anaerobic mesophilic spores | NF ISO 4833 after 10 minutes at 70°C and with anaerobic incubation | <10 | <10 | <10 | <10 | <10 |
| Aerobic thermophilic spores | NF ISO 4833 after 10 minutes at 70°C and with 55°C incubation | <10 | <10 | <10 | <10 | <10 |
| Anaerobic thermophilic spores | NF ISO 4833 after 10 minutes at 70°C and with 55°C anaerobiotic incubation | <10 | <10 | <10 | <10 | <10 |

| | | | | | | |
|---|---|---|---|---|---|---|
| "<1" corresponds to "<1 CFU/g" (CFU= coloning forming units) "<10" corresponds to "<10 CFU/g" (CFU= coloning forming units) | | | | | | |

### Conclusions:

In measurements performed at days 30, 60, 90, and 120 from the completion of the whole manufacturing process, no vegetative or sporoulous cell could be found. The packaged product of the invention was therefore of highly satisfactory microbiologic quality.

### 3.2. Effect of the process of the invention on a sporoulous bacteria population, namely Bacillus cereus.

The aqueous mixture of the invention, containing 10 % yogurt was inoculated with 2.9 10⁶ cfu/g *Bacillus cereus* before the cooking, followed by a pasteurising step.

After the cooking and pasteurising steps, no *Bacillus cereus* bacteria or spores (vegetative and sporoulous cells) could be found in the product.

### Conclusions:

The cooking and pasteurising steps make it possible to achieve a complete lost of *Bacillus cereus* bacteria or spores in the product of the invention.

### 3.3. Yeast and mould content of the product

The product of the invention was analysed during its storage at 30°C at days 30, 60, 90, and 120 after packaging. A product having not undergone the pasteurising step was also analysed as a control.

### Conclusion:

No yeast or mould could be identified into the final product, would it be pasteurised or not. Thus, the biochemical composition of the final product impairs yeast or mould development.

### 3.4. Bacteriological content if the final packaged product (product with 10% of yogurt)

The bacterial content of a 10 % yogurt of the invention, which was obtained according to the above-mentioned manufacturing process and stored at 20°C or 30°C, was measured from the completion of the whole manufacturing process, at days 30 and 120. Vegetative cells and spores were also counted.
Product 1: Storage at 20°C during 120 days
Product 2: Storage at 30°C during 120 days
Product 3: Storage at 30°C during 30 days

### Conclusion:

In measurements performed at days 30 and 120 from the completion of the whole manufacturing process, no vegetative or sporoulous cell could be found in products 1, 2 and 3. The packaged products of the invention was therefore of highly satisfactory microbiologic quality.

## Claims

1. A process for manufacturing a packaged edible product, comprising:
a) obtaining an aqueous mixture comprising tamarind (Tamarindus nilotica) fruit pulp and neb neb (Acacia nilotica) fruits,
b) adjusting the pH of the thus obtained aqueous mixture to a value from 3.6 to 4.8, preferably to a value from 3.8 to 4.05, by adding a weak organic acid,
c) cooking said mixture at a temperature above about 80°C,
d) adjusting the pH of the resulting mixture to a value from 3.6 to 4.8, preferably to a value from 3.7 to 4.2, by adding a weak organic acid,
e) optionally cooling the cooked mixture to a temperature of at least about 65°C,
f) packaging and scaling the thus obtained mixture, and
g) pasteurising the resulting sealed packs at a temperature of about 92°C, in order to obtain a packaged edible product.

2. The process according to claim 1, wherein said tamarind fruit pulp is added in the aqueous mixture of step a) in an amount from 0.5 % to 16 %, preferably from 1% to 3 %, and more preferably of about 1.84%.

3. The process according to anyone of claims 1 and 2, wherein said neb neb fruits are added to the aqueous mixture of step a) in an amount from 0.1 % to 2 %, preferably from 0.15 % to 1 %, more preferably of about 0.175 %.

4. The process according to anyone of claims 1 to 3, wherein a dairy mixture is added either before step b), or after step b) and before step d) so that the mixture of steps e) to g) is a dairy mixture, and the edible product is a dairy product.

5. The process according to claim 4, wherein said dairy mixture is a fermented milk mixture, preferably chosen from stirred yoghurt, drinkable yoghurt, and fermented milk.

6. The process according to anyone of claims 1 to 5, wherein said cooking step c) is performed at a temperature from 75°C to 95°C during 2 to 20 minutes, preferably at a temperature from 82°C to 87°C during 6 to 8 minutes, and more preferably at a temperature of about 85°C during about 7 minutes.

7. The process according to anyone of claims 1 to 6, wherein the final temperature of said cooling step e) is from 65°C to 71°C, preferably from 65°C to 68°C.

8. The process according to anyone of claims 1 to 7, wherein said weak organic acid which is used in steps b) and/or d) is chosen from lactic acid, acetic acid, phosphoric acid, sorbic acid, benzoic acid, succinic add, propionic acid, fumaric acid, ascorbic acid, tartaric acid, citric acid and malic acid.

9. The process according to anyone of claims 1 to 8, wherein said pasteurising step g) is performed at a temperature from 75°C to 95°C during 30 seconds to 15 minutes, preferably at a temperature of about 92°C during about 7 minutes.

10. A packaged long shelf life edible product obtainable by the manufacturing process of anyone of claims 1 to 9.

11. A packaged long shelf life edible product comprising:
a. A Tamarind fruit pulp,
b. A Neb neb fruit, and
c. A weak organic acid.

12. The edible product according to anyone of claims 10 and 11, containing from 0.5 % to 16 %, preferably from 1 % to 3 %, and more preferably of about 1.84% of tamarind fruit pulp.

13. The edible product according to anyone of claims 10 to 12, containing from 0.1 -% to 2 %, preferably from 0.15 % to 1 %, more preferably of about 0.175 % of neb neb fruit.

14. The edible product according to anyone of claims 10 to 13, wherein said weak organic acid is chosen from lactic acid, acetic acid, phosphoric acid, sorbic acid, benzoic acid, succinic acid, propionic acid, fumaric acid, ascorbic acid, tartaric acid, citric acid and malic acid, and is preferably malic acid.

15. The edible product according to anyone of claims 10 to 14, comprising from 0.1 to 10 % w/w of said weak organic acid.

16. The edible product according to anyone of claims 10 to 15, further comprising a dairy mixture, preferably a fermented milk mixture, chosen from stirred yoghurt, drinkable yoghurt and fermented milk.

17. The edible product according to anyone of claims 10 to 16, having a pH from 3.9 to 4.15 at 20°C.

## Patentansprüche

1. Verfahren zur Herstellung eines verpackten, essbaren Produkts, umfassend:
(a) Gewinnung eines wässrigen Gemischs, das Fruchtmasse von Tamarinden (tamarindus nilotica) und Früchte der arabischen Gummiakazie (acacia nilotica) umfasst,
(b) Abgleichen des pH-Werts des so gewonnenen Gemischs durch Zufügen einer schwachen organischen Säure auf einen Wert von 3,6 bis 4,8, vorzugsweise einen Wert von 3,8 bis 4,05,
(c) Kochen des Gemischs bei einer Temperatur oberhalb von etwa 80°C,
(d) Abgleichen des pH-Werts des resultierenden Gemischs durch Hinzufügen einer schwachen organischen Säure auf einen Wert von 3,6 bis 4,8, vorzugsweise auf einen Wert von 3,7 bis 4,2,
(e) wahlweise Abkühlen des gekochten Gemischs auf eine Temperatur von wenigstens etwa 65°C,
(f) Abpacken und Abdichten des so gewonnenen Gemischs, und
(g) Pasteurisieren der resultierenden abgedichteten Packungen bei einer Temperatur von etwa 92°C, um ein verpacktes essbares Produkt zu gewinnen.

2. Verfahren nach Anspruch 1, wobei in Schritt (a) Tamarindenfruchtmasse in einem Umfang von 0,5% bis 16%, vorzugsweise von 1% bis 3%, besonders bevorzugt von etwa 1,84%, hinzugefügt wird.

3. Verfahren nach einem der Ansprüche 1 und 2, wobei in Schritt (a) die Früchte der arabischen Gummiakazie in einem Umfang von 0,1% bis 2%, vorzugsweise von 0,15% bis 1%, besonders bevorzugt von etwa 0,175%, hinzugefügt werden.

4. Verfahren nach einem der Ansprüche 1 bis 3, wobei entweder vor Schritt (b) oder nach Schritt (b) und vor Schritt (d) ein Milchgemisch hinzugefügt wird, so dass das Gemisch in den Schritten (e) bis (g) ein Milchgemisch ist und das essbare Produkt ein Milchprodukt ist.

5. Verfahren nach Anspruch 4, wobei das Milchgemisch ein fermentiertes Milchgemisch ist, vorzugsweise eines aus gerührtem Joghurt, trinkbarem Joghurt und fermentierter Milch ist.

6. Verfahren nach einem der Ansprüche 1 bis 5, wobei das Kochen in Schritt (c) bei einer Temperatur von 75°C bis 95°C und einer Dauer von 2 bis 20 Minuten durchgeführt wird, vorzugsweise bei einer Temperatur von 82°C bis 87°C und einer Dauer von 6 bis 8 Minuten, besonders bevorzugt bei einer Temperatur von etwa 85°C und einer Dauer von 7 Minuten.

7. Verfahren nach einem der Ansprüche 1 bis 6, wobei die Endtemperatur des Kühlens in Schritt (e) zwischen 65°C und 71°C, vorzugsweise zwischen 65°C und 68°C liegt.

8. Verfahren nach einem der Ansprüche 1 bis 7, wobei die schwache organische Säure, die in den Schritten (b) und/oder (d) verwendet wird, eines aus Milchsäure, Essigsäure, Phosphorsäure, Sorbinsäure, Benzoesäure, Bernsteinsäure, Propansäure, Fumarsäure, Ascorbinsäure, Weinsäure, Zitronensäure und Apfelsäure ist.

9. Verfahren nach einem der Ansprüche 1 bis 8, wobei das Pasteurisieren in Schritt (g) bei einer Temperatur von 75°C bis 95°C und einer Dauer von 30 Sekunden bis 15 Minuten durchgeführt wird, vorzugsweise bei einer Temperatur von etwa 92°C und einer Dauer von etwa 7 Minuten.

10. Verpacktes, lange lagerungsbeständiges, essbares Produkt, das durch ein Herstellungsverfahren nach einem der Ansprüche 1 bis 9 gewonnen werden kann.

11. Verpacktes, lange lagerungsbeständiges, essbares Produkt, umfassend:
(a) eine Tamarindenfruchtmasse,
(b) eine Frucht der arabischen Gummiakazie, und
(c) eine schwache organische Säure.

12. Essbares Produkt nach einem der Ansprüche 10 und 11, das zwischen 0,5% und 16%, vorzugsweise zwischen 1% und 3%, besonders bevorzugt etwa 1,84% Tamarindenfruchtmasse enthält.

13. Essbares Produkt nach einem der Ansprüche 10 bis 12, das zwischen 0,1 % bis 2%, vorzugsweise zwischen 0,15% bis 1 %, besonders bevorzugt etwa 0,175% von der Frucht der arabischen Gummiakazie enthält.

14. Essbares Produkt nach einem der Ansprüche 10 bis 13, wobei die schwache organische Säure eines aus Milchsäure, Essigsäure, Phosphorsäure, Sorbinsäure, Benzoesäure, Bernsteinsäure, Propansäure, Fumarsäure, Ascorbinsäure, Weinsäure, Zitronensäure und Apfelsäure ist, und vorzugsweise Apfelsäure ist.

15. Essbares Produkt nach einem der Ansprüche 10 bis 14, das einen Massenanteil zwischen 0,1% und 10% der schwachen organischen Säure umfasst.

16. Essbares Produkt nach einem der Ansprüche 10 bis 15, ferner umfassend ein Milchgemisch, vorzugsweise ein fermentiertes Milchgemisch, ausgewählt aus gerührtem Joghurt, trinkbarem Joghurt und fermentierter Milch.

17. Essbares Produkt nach einem der Ansprüche 10 bis 16, das bei 20°C einen pH-Wert on 3,9 bis 4,15 hat.

## Revendications

1. Procédé de production d'un produit comestible conditionné, comprenant :
a) l'obtention d'un mélange aqueux comprenant de la pulpe du fruit tamarin *(Tamarindus nilotica)* et du fruit neb neb *(Acacia nilotica),*
b) l'ajustement du pH du mélange aqueux ainsi obtenu à une valeur de 3,6 à 4,8, de préférence, à une valeur de 3,8 à 4,05, en ajoutant un acide organique faible,
c) la cuisson dudit mélange à une température supérieure à environ 80° C,
d) l'ajustement du pH du mélange obtenu à une valeur de 3,6 à 4,8, de préférence, à une valeur de 3,7 à 4,2 en ajoutant un acide organique faible,
e) éventuellement, le refroidissement du mélange cuit à une température d'au moins environ 65° C,
f) le conditionnement et le scellement du mélange ainsi obtenu, et
g) la pasteurisation des emballages scellés obtenus à une température d'environ 92° C, afin d'obtenir un produit comestible emballé.

2. Procédé selon la revendication 1, dans lequel ladite pulpe de fruit tamarin est ajoutée dans le mélange aqueux de l'étape a) en une quantité de 0,5 % à 16 %, de préférence de 1 % à 3 % et de manière davantage préférée, d'environ 1,84 %.

3. Procédé selon l'une quelconque des revendications 1 et 2, dans lequel les fruits neb neb sont ajoutés au mélange aqueux de l'étape a) en une quantité de 0,1 % à 2 %, de préférence, de 0,15 à 1 %, de manière davantage préférée, d'environ 0,175 %.

4. Procédé selon l'une quelconque des revendications 1 à 3, dans lequel un mélange laitier est ajouté soit avant l'étape b), soit après l'étape b) et avant l'étape d) de sorte que le mélange des étapes e) à g) soit un mélange laitier et le produit comestible est un produit laitier.

5. Procédé selon la revendication 4, dans lequel ledit mélange laitier est un mélange laitier fermenté, de préférence choisi parmi un yaourt brassé, un yaourt à boire et du lait fermenté.

6. Procédé selon l'une quelconque des revendications 1 à 5, dans lequel ladite étape de cuisson c) est réalisée à une température de 75° C à 95° C pendant 2 à 20 minutes, de préférence à une température de 82° C à 87° C pendant 6 à 8 minutes et de manière davantage préférée, à une température d'environ 85° C pendant environ 7 minutes.

7. Procédé selon l'une quelconque des revendications 1 à 6, dans lequel la température finale de ladite étape de cuisson c) est de 65° C à 71° C, de préférence, de 65° C à 68° C.

8. Procédé selon l'une quelconque des revendications 1 à 7, dans lequel ledit acide organique faible qui est utilisé dans les étapes b) et/ou d) est choisi parmi l'acide lactique, l'acide acétique, l'acide phosphorique, l'acide sorbique, l'acide benzoïque, l'acide succinique, l'acide propionique, l'acide fumarique, l'acide ascorbique, l'acide tartrique, l'acide citrique et l'acide malique.

9. Procédé selon l'une quelconque des revendications 1 à 8, dans lequel ladite étape de pasteurisation g) est réalisée à une température de 75° C à 95° C pendant 30 secondes à 15 minutes, de préférence, à une température d'environ 92° C pendant environ 7 minutes.

10. Produit conditionné à longue conservation pouvant être obtenu par le procédé de production selon l'une quelconque des revendications 1 à 9.

11. Produit conditionné à longue conservation comprenant :
a. de la pulpe du fruit tamarin,
b. le fruit neb neb, et
c. un acide organique faible.

12. Produit comestible selon l'une quelconque des revendications 10 et 11, contenant de 0,5 % à 16 %, de préférence de 1 % à 3 % et de manière davantage préférée, d'environ 1,84 % de pulpe de fruit tamarin.

13. Produit comestible selon l'une quelconque des revendications 10 à 12, contenant de 0,1 % à 2 %, de préférence, de 0,15 % à 1 %, de préférence, d'environ 0,175 % de fruit neb neb.

14. Produit comestible selon l'une quelconque des revendications 10 à 13, dans lequel ledit acide organique faible est choisi parmi l'acide lactique, l'acide acétique, l'acide phosphorique, l'acide sorbique, l'acide benzoïque, l'acide succinique, l'acide propionique, l'acide fumarique, l'acide ascorbique, l'acide tartrique, l'acide citrique et l'acide malique et est de préférence, l'acide malique.

15. Produit comestible selon l'une quelconque des revendications 10 à 14, comprenant de 0,1 à 10 % p/p dudit acide organique faible.

16. Produit comestible selon l'une quelconque des revendications 10 à 15, comprenant en outre un mélange laitier, de préférence, un mélange de lait fermenté choisi parmi un yaourt brassé, un yaourt à boire et du lait fermenté.

17. Produit comestible selon l'une quelconque des revendications 10 à 16, ayant un pH de 3,9 à 4,15 à 20° C.
